# FASCICULE DE BREVET EUROPEEN

(11) **EP 3 096 260 B1**
(45) Date de publication et mention de la délivrance du brevet: **30.10.2019**
(21) Numéro de dépôt: 16169723.0
(22) Date de dépôt: 13.05.2016
(51) Int. Cl.: G06F 21/86

(54) **CLAVIER COMPACT SÉCURISÉ**
GESICHERTE KOMPAKTTASTATUR
SECURE COMPACT KEYBOARD

(30) Priorité: 22.05.2015 FR 1554662
(43) Date de publication de la demande: 23.11.2016
(73) Titulaire: Ingenico Group, 75015 Paris (FR)
(72) Inventeur: BARNERON, Sylvain, 26500 BOURG-LES-VALENCE (FR)
(74) Mandataire: Vidon Brevets & Stratégie

(56) Documents cités:
- US-A1- 2006 250 377
- US-A1- 2014 203 953
- US-A1- 2014 217 169

## Description

### 1. Domaine

La présente technique se rapporte à la sécurisation de claviers. Plus particulièrement, la présente technique se rapporte à la sécurisation de claviers de dispositifs de saisie sécurisés, tels que des terminaux de paiement ou des pinpads. En effet, de tels dispositifs de saisie sécurisés sont utilisés de manière quotidienne pour recevoir des données en provenance d'utilisateurs. Ces données sont hautement confidentielles et doivent être protégées des tentatives de copie ou de vol. Ces données sont par exemple les codes confidentiels qui sont saisis par les utilisateurs lorsqu'ils souhaitent réaliser un paiement sur un terminal de paiement. Ces données peuvent également être des mots de passe ou des codes d'identification personnels qui sont saisis sur un clavier d'un dispositif donnant accès à un bien ou à un service.

### 2. Art antérieur

Dans les terminaux de paiements ou dans les dispositifs de saisie sécurisés, il est nécessaire de se protéger contre des tentatives de fraudes. Ainsi, des mesures de protections sont mises en œuvre. Ces mesures de protection sont soit des mesures de protection matérielles soit des mesures de protection logicielles. Parmi les mesures de protection matérielles, on trouve notamment les techniques destinées à protéger le clavier du terminal. Il faut notamment se prémunir par exemple d'une tentative de récupération de code d'identification personnel et plus généralement des tentatives d'espionnage du clavier.

Dans des terminaux d'ancienne génération, la taille du terminal lui-même et la taille des touches du clavier du terminal permettent d'écarter les touches de manière plus ou moins importante. Cela présente un intérêt car des techniques appelées « fausses touches » sont utilisées pour renforcer la sécurité et vérifier que le terminal ne subit pas une tentative de démontage (et notamment une vérification d'une tentative d'ouverture non autorisée du terminal, tentative ayant pour objectif d'insérer, au sein du terminal, un dispositif espion de récupération des signaux des touches tapées sur le clavier par les utilisateurs). Un terminal de paiement comprend de manière classique, une demi-coque supérieure et une demi-coque inférieure. La demi-coque supérieure comprend des ouvertures qui sont utilisées par exemple pour laisser dépasser les touches du clavier. La demi-coque supérieure comprend également une ouverture pour l'écran d'affichage du terminal. Au niveau du clavier, les dispositifs fausses touches sont utilisés pour vérifier que la demi-coque supérieure du terminal est bien emboitée d'une part dans la demi-coque inférieure et d'autre part que les fausses touches reposent sur au moins une carte de circuit imprimé (carte mère) présente dans le terminal de paiement. Ceci permet de s'assurer que le terminal de paiement n'est pas ouvert et donc qu'il n'y a pas de tentative d'introduction d'un dispositif espion au niveau du clavier du terminal de paiement par exemple. Les fausses touches sont pressées par exemple par l'intermédiaire d'une extension en plastique (pleine ou non) s'étendant de l'intérieur de la demi-coque supérieure pour venir prendre place sur la fausse touche de la carte de circuit imprimé (carte mère). Cette solution de l'art antérieur est généralement assez efficace. Néanmoins, cette solution est assez ancienne et ne convient pas nécessairement aux nouveaux types de terminaux de paiement.

En effet, cette solution de l'art antérieur pose au moins deux problèmes : le premier problème tient au fait qu'il est difficile de créer de telles fausses touches lorsque les touches du clavier sont disposées de manière compacte et serrée. En effet, la solution de l'art antérieur nécessite des espaces relativement importants entre les touches afin que des extensions en plastique s'étendant de l'intérieur de la demi-coque supérieure puissent traverser le clavier et venir prendre place sur la fausse touche de la carte mère. Or, dans une optique de réduction de la taille des terminaux de paiement, l'espace disponible pour de telles extensions en plastique n'est pas obligatoirement présent. De plus, les extensions en plastiques induisent également une épaisseur importante au niveau du produit. Dans l'optique de réduction de la taille des terminaux de paiement, l'épaisseur des terminaux doit elle aussi être limitée. Le système de fausse touche « classique » implique une compression (c'est-à-dire une précontrainte ou dit autrement une sur-longueur) afin de supporter les déformations des capots à causes par exemple à cause de la chaleur ou des chutes du produit.

Le deuxième problème tient à la fabrication de l'extension en plastique elle-même, et d'un point de vue plus général, à la fabrication de la demi-coque supérieure. Cette fabrication est problématique tant du point de vue esthétique que du point de vue sécuritaire. Du point de vue esthétique, sur la face externe, visible, de la demi-coque supérieure, la présence des extensions provoque une légère déformation en creux, à l'endroit où se situe cette extension. Ceci est dû au fait que la demi-coque inférieure et la demi-coque supérieure, tout comme la majorité des autres pièces plastiques nécessaires à la fabrication du terminal, sont fabriquées à l'aide d'un procédé d'injection consistant à introduire de la matière plastique chaude sous pression dans un moule. L'injection plastique provoque des déformations à certains endroits des pièces, par exemple au niveau des extensions. Le problème sécuritaire découle de ce problème esthétique. En effet, un attaquant sait précisément où se situent les fausses touches en observant le clavier : les déformations qui sont présentes entre les touches, aux endroits où les extensions en plastiques se prolongent vers les fausses touches disposées sur la carte mère du terminal permettent d'identifier aisément l'emplacement de ces fausses touches et, par voie de conséquence, de renseigner l'attaquant sur les endroits ou ne se situent pas ces fausses touches. L'attaquant peut alors tenter de percer la demi-coque supérieure pour y introduire un dispositif espion.

Une solution à ce problème pourrait être de recouvrir la demi-coque supérieure d'un film ou d'une enveloppe permettant de masquer ces déformations et ces imperfections. Malheureusement, cette solution ne permettrait pas de résoudre le problème de place disponible pour les extensions en plastique. Une autre solution pourrait être d'utiliser une matière plastique différente qui ne présenterait pas ces problèmes de déformation. Outre qu'elle ne résout pas les problèmes de place disponible, tant en longueur, largeur qu'en épaisseur, cette solution serait également plus onéreuse.

Le document US 2006/0250377 A1 décrit une interface utilisateur intégrée à un lecteur multimédia ou à un autre dispositif électronique. Elle décrit notamment en détail les composants d'un dispositif de saisie de données, qui peut être assimilé à un clavier et qui permet à l'utilisateur de naviguer au sein de l'interface. Cependant, les composants décrits dans cette demande de brevet américain ne permettent pas de protéger les signaux dans le dispositif de saisie de données contre les attaques de l'extérieur du dispositif.

### 1. Résumé

La présente divulgation permet de résoudre au moins certain des problèmes posés par ces terminaux de l'art antérieur. En effet, la présente technique se rapporte à un Clavier d'un dispositif de saisie de données, clavier du type comprenant un circuit imprimé, une entretoise comprenant une pluralité d'emplacement de positionnement de touches, une pluralité de touches, chaque touche étant disposée au moins indirectement en contact avec une empreinte de touche correspondante sur ledit circuit imprimé et une plaque de matériau transparent dans laquelle des trous correspondant à chaque touche sont pratiqués.

Un tel clavier se caractérise par le fait que le circuit imprimé, l'entretoise et la plaque de matériau transparent sont appliqués de sorte à constituer un ensemble indémontable de l'extérieur du dispositif de saisie de données.

Ainsi, le clavier ne peut pas être démonté. Dès lors, il n'est pas nécessaire de prévoir, sur ce clavier, des éléments permettant de détecter l'ouverture de celui-ci. En fonction des modes de réalisation, le circuit imprimé, l'entretoise et la plaque de matériau transparent sont par exemple collés ou encore vissés par l'intérieur.

Selon une caractéristique particulière, ladite pluralité de touches comprend des touches en matériau déformable.
Selon une caractéristique particulière, ladite pluralité de touches est divisée en un nombre prédéterminé de séries de touches, chaque série de touche constituant un élément indépendant comprenant une base, ladite base reposant au moins indirectement sur ledit circuit imprimé.

Selon un mode de réalisation particulier, ladite base comprenant en outre une forme complémentaire d'un emplacement de positionnement de touches de ladite entretoise.

Ainsi, il n'est pas possible de se tromper lors de l'assemblage des touches sur le clavier.

Selon une caractéristique particulière ladite base s'étend sous la plaque de matériau transparent sur une longueur prédéterminée.

Selon une caractéristique particulière, la longueur prédéterminée est déterminée en fonction de l'épaisseur de ladite plaque de matériau transparent.

Ainsi, il n'est pas possible d'usiner l'entretoise sans abimer la plaque en matériau transparent, ce qui rend la tentative de piratage visible.

Selon une caractéristique particulière, le clavier comprend une feuille de dôme faisant interfaçage entre ledit circuit imprimé et lesdites touches.

Selon un autre aspect, la présente se rapporte également à un terminal de paiement qui comprend un clavier tel que décrit précédemment.

### 4. Dessins

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :
- la figure 1 est une vue schématique d'un terminal de paiement de l'art antérieur ;
- la figure 2 illustre un mode de réalisation du clavier selon la présente technique ;
- la figure 3 illustre le montage du clavier selon le mode de réalisation de la figure 2 ;
- la figure 4 illustre une tentative de perçage du clavier de la figure 2.

### 5. Description

### 5.1. Rappels

Le principe général de la technique décrite consiste à remplacer la fonction de pression sur des fausses touches par une nouvelle architecture de clavier. De manière complémentaire, l'architecture de clavier remet également en cause la manière dont on protège les signaux du clavier. Une telle architecture de clavier est parfaitement adaptée aux claviers de dispositifs de saisie sécurisés, comme par exemple les terminaux de paiement ou les pinpads. Cette solution est particulièrement bien adaptée à des claviers de taille réduite, qui doivent prendre place par exemple dans des dispositifs compacts.

Le principe à la base de la présente technique est de rendre au moins certaines parties du clavier indémontables de l'extérieur (c'est-à-dire par l'extérieur du dispositif de saisie de données lorsque le terminal est monté dans ce dispositif de saisie de données). En effet, comme indiqué supra, le besoin de fausses touches permet de détecter une ouverture non autorisée du terminal (notamment par un attaquant). Dans le principe de la technique, on ne peut pas démonter le clavier de l'extérieur, donc l'utilisation de fausses touches n'est pas nécessaire.

Pour la suite et pour ce qui précède, il est entendu qu'un clavier, au sens de la présente, comprend un pavé de touches (en silicone ou dans une autre matière déformable, voire un pavé de touches mécaniques) comprenant un certain nombre de touches. Lorsque le terminal ou le pinpad est monté, les touches de ce pavé de touches, sont situées en regard de pastilles de contact montées sur la carte mère. L'appui sur une touche du pavé de touches provoque une pression sur la pastille de contact correspondante de la carte mère. Entre les pastilles de contact « régulières » correspondant à des touches réelles du clavier, on dispose de pastilles de contact de sécurité, qui sont appelées « fausses touches ». Ces pastilles de sécurité sont pressées, lors du fonctionnement du dispositif de saisie de données. S'il advient que l'une des pastilles de sécurité ne soit pas ou plus pressée, le dispositif passe en mode intrusion et met en œuvre des mesures de sécurité (effacement de la mémoire par exemple).

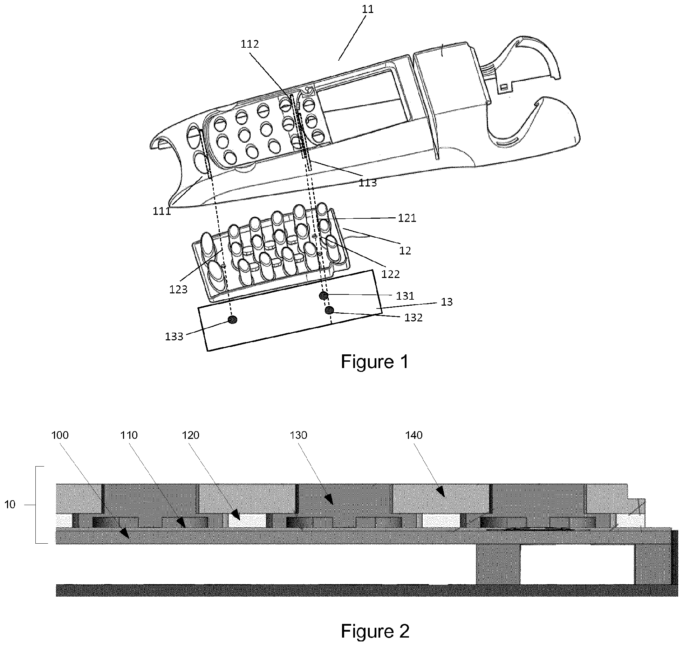

À titre indicatif, un exemple de terminal de l'art antérieur est décrit en relation avec la figure 1. La figure 1 illustre la structure d'un terminal de paiement de l'art antérieur. Ce terminal de paiement comprend une demi-coque supérieure 11, un pavé de touches en silicone 12 formant des touches souple d'un clavier et éventuellement un guide lumière (non représenté), une carte de mère 13 et une demi-coque inférieure non représentée. Lors du montage du terminal de paiement, la demi-coque supérieure 11 et la demi-coque inférieure sont assemblées et emboitent le pavé de touches 12 et la carte mère 13. Les extensions 111, 112 et 113 en plastique s'étendant de l'intérieur de la demi-coque supérieure traversent le pavé de touches en silicone 12 (et le guide lumière s'il existe) par les orifices 121, 122 et 123, et applique une pression sur les fausses touches 131, 132, et 133 de la carte mère 13 (les extensions peuvent être munies d'éléments complémentaires pour exercer la pression sur les fausses touches, tels que des pucks en silicone). Lors de l'ouverture du terminal, les extensions s'écartent des fausses touches. Cette ouverture (intrusion) est ainsi détectée par les circuits de détection connectés aux fausses touches et permettent de déclencher un mécanisme de protection du terminal (consistant par exemple à effacer les mémoires sécurisées du terminal). En revanche, lorsque l'attaquant connaît l'emplacement des fausses touches (à cause des déformations de la matière plastique de la demi-coque supérieure), il peut aisément attaquer le terminal en tentant de percer la demi-coque supérieure pour y introduire un dispositif espion ou encore pour tenter de maintenir une pression sur les fausses touches même en cas de démontage du terminal.

Pour pallier l'absence de fausses touches dont la mise en œuvre n'est pas aisée du fait de la compacité du dispositif de saisie, les inventeurs ont eu l'idée de rendre le clavier indémontable. Comme le clavier est indémontable, il ne peut pas y avoir de tentative de démontage du clavier. Par indémontable, on entend qu'au moins certains éléments constituant le clavier ne sont pas aisément séparables les uns des autres.

D'une manière générale, la technique est définie comme étant un clavier d'un dispositif de saisie de données, clavier du type comprenant un circuit imprimé, une entretoise comprenant une pluralité d'emplacement de positionnement de touches, une pluralité de touches, chaque touche étant disposée au moins indirectement en contact avec une empreinte de touche correspondante sur ledit circuit imprimé et une plaque de matériau transparent dans laquelle des trous correspondant à chaque touche sont pratiqués, clavier caractérisé en ce que le circuit imprimé, l'entretoise la plaque de matériau transparent sont appliqués de sorte à constituer un ensemble indémontable.

Plus particulièrement, dans un mode de réalisation, ces éléments constitutifs du clavier sont collés les uns aux autres. Il est également envisageable de visser ces éléments les uns aux autres, par l'arrière (i.e. les vis sont vissées à l'arrière du clavier, c'est-à-dire qu'une fois le clavier monté les vis sont situées à l'intérieur du terminal et elles ne sont pas détectables par un attaquant et le clavier n'est pas démontable par l'extérieur du dispositif de saisie).

Dès lors, pour un attaquent, il est nécessaire de tenter de pénétrer directement le clavier, sans pouvoir le démonter. Afin de limiter voire annuler les tentatives de pénétration du clavier, de nouvelles mesures de sécurités sont associées à ce clavier. Une mesure de sécurité découle du fait que le clavier ne soit pas démontable. En effet, comme le clavier n'est pas démontable, il n'est pas possible de tenter de pénétrer le terminal en retirant une partie du clavier sans que cette tentative ne laisse des traces visibles, comme cela est le cas des terminaux de l'art antérieur.

Par ailleurs, dans au moins un mode de réalisation, les touches du clavier sont conformées pour impliquer une altération visible du clavier en cas de tentative d'infraction. En effet, comme le clavier n'est pas démontable, l'attaquant doit nécessairement passer au travers du clavier pour tenter de pénétrer dans le dispositif de saisie de données. Cela signifie que l'attaquant doit tenter de percer le clavier pour accéder soit aux touches soit à l'intérieur du dispositif de saisie de données.

Le clavier tel que décrit en rapport avec la présente technique ne présente pas les inconvénients de l'art antérieur. En effet, le fait de disposer d'un clavier indémontable permet de limiter intrinsèquement les tentatives de pénétration de ce clavier. Par ailleurs, il n'est pas possible de pénétrer dans la zone sécurisée protégée par ce clavier.

Dans au moins un mode de réalisation, le caractère indémontable du clavier est obtenu par collage des différents éléments du clavier. Plus particulièrement, le caractère indémontable du clavier est obtenu en collant entre elles les différentes couches formant le clavier, à l'exception des touches en matière déformable (par exemple en silicone). Le paradigme sous-jacent est de considérer que dans la mesure où l'espace nécessaire pour le clavier est limité, ce n'est plus l'accès individuel aux touches qu'il faut contrôler, mais plutôt l'accès simultané à l'ensemble des touches.

En effet, dans un processus de piratage d'un clavier, comme évoqué précédemment, consiste à insérer, dans le terminal, un dispositif espion, également appelé « bug ». Ce dispositif espion est utilisé pour détecter l'utilisation des touches du clavier par l'utilisateur. Cela permet par exemple au dispositif espion de récupérer des mots de passe ou des codes d'identification personnels (PIN). Ces données sont ensuite transmises à l'attaquant. Pour que le dispositif espion puisse accomplir sa fonction, il est nécessaire qu'il soit relié à chacune des touches du clavier. Un fil conducteur doit ainsi être relié à chacune des touches du clavier.

Le principe de la technique décrite consiste à empêcher ou limiter fortement la possibilité de relier ces fils à un dispositif espion en compactant le plus possible le clavier tout en configurant les touches pour qu'elles soient limitent les possibilités d'espionnage.

### 5.2. Description d'un exemple de réalisation

Dans ce mode de réalisation, présenté en relation avec les figures 2, 3 et 4, un clavier 10 est constitué d'un ensemble comprenant un circuit imprimé (« PCB ») 100. Ce circuit imprimé comprend un certain nombre de doubles anneaux de contact (ou de cible de contact), sous la forme de piste de cuivre (ou d'anneau et de pions de contact). Ces doubles anneaux représentent les touches du clavier. Un double anneau de contact se rapporte à une touche. Un double anneau de contact fonctionne selon un principe de mise sous pression d'un dôme : la base du dôme est en contact permanent avec l'anneau extérieur tandis que la partie centrale du dôme n'est en contact avec l'anneau (ou le pion) central que lorsque la touche correspondante est pressée. Il en résulte l'établissement d'un circuit entre l'anneau extérieur et l'anneau (ou le pion) central et donc la détection de la pression de la touche par un processeur. Ainsi, le clavier 10 comprend également une feuille de dômes 110 (en anglais « dôme foil ») qui est positionné au-dessus du circuit imprimé 100, et dans laquelle un dôme est positionné au-dessus d'un double anneau de contact. Une entretoise 120 est positionnée au-dessus de la feuille de dômes 110. Cette entretoise sert à positionner les touches 130. Dans ce mode de réalisation, l'entretoise 120 définit cinq emplacements (120-1, 120-2, 120-3, 120-4, 120-5) de quatre séries de touches (130-1, 130-2, 130-3, 130-4, 130-5). Dans ce mode de réalisation, les séries de touches sont formées d'une bande de matière souple et déformable, comme des bandes en silicone ou en caoutchouc. Cette manière de d'agencer les touches en série est avantageuse car elle facilite l'assemblage du clavier. Par ailleurs les séries de touches (130-1, 130-2, 130-3, 130-4, 130-5) présentent des motifs externes différents. Un motif externe est en quelque sorte la forme de la base de la série de touche. Un motif externe d'une série de touches ne correspond qu'à un seul motif d'emplacement au niveau de l'entretoise. Dès lors, l'opérateur qui effectue le montage du clavier ne peut pas se tromper lors du positionnement des touches du clavier car, une fois l'entretoise 120 posée, chaque emplacement (120-1, 120-2, 120-3, 120-4, 120-5) ne correspond qu'à une seule série de touches donnée. Dès lors, il n'est pas possible de d'insérer une série de touche qui ne correspond pas à un motif d'emplacement. En fonction des modes de réalisation, l'entretoise peut également remplir la fonction de guide lumière. L'ensemble est ensuite recouvert d'une plaque de verre 140 (ou une plaque en matériau transparent équivalent), dans laquelle des orifices sont pratiqués. Chaque orifice de cette plaque de verre correspond à une touche du clavier. Dans ce mode de réalisation, l'épaisseur totale du clavier ainsi obtenu est de moins de quatre millimètres. Le clavier obtenu est également fortement sécurisé. En effet, pour éviter d'utiliser les solutions de protection ci-dessus spécifiques au clavier mécanique, la plaque de verre 140, l'entretoise 120, la feuille de dôme 110 et le PCB clavier 100 sont collés fortement entre eux afin de ne créer qu'un seul sous ensemble. L'ensemble clavier obtenu est ainsi indémontable.

Ainsi, si un attaquant tente de décoller un des éléments, ceci entraine nécessairement le soulèvement (même minime) du PCB clavier 100. Ce soulèvement est détecté par des mesures de sécurité complémentaires situées sous le PCB clavier 100 (comme par exemple des zébras ou des fausses touches). Le soulèvement du PCB clavier permet alors de détecter l'effraction suite par exemple à une perte de contact de zébras servant à protéger une zone sécurisée.

Alternativement, plutôt que de devoir définir des points de colle précis pour la feuille de dôme 110, celle-ci « noyée » dans l'épaisseur de l'entretoise 120 afin d'optimiser l'épaisseur et n'est pas collée, ce qui lui permet donc de se déformer pour actionner les touches.

Par ailleurs, un autre intérêt de cette solution est qu'elle permet de se protéger du type d'attaque dit du « middle layer ». Ce type d'attaque constitue en l'introduction d'un dispositif électronique de surveillance, qui est relié aux touches du clavier. Ce type de dispositif permet de lire les données entrées au clavier. Il nécessite l'introduction d'un fil, en série, sur toutes les touches du clavier, le fil étant ensuite relié au dispositif électronique de surveillance. En règle générale, le fil est disposé sous le clavier physique, et donc invisible de l'utilisateur. Le clavier de ce mode de réalisation permet de se prémunir de ce type d'attaque.

En effet, avec cette solution, l'attaquant peut facilement accéder au touche une à une : en effet, les touches étant en matière déformable, il est aisé d'accéder à une touche. En revanche, l'attaquant ne pourra pas passer des fils jusqu'au dispositif espion pour les touches se trouvant au centre du clavier : si elle veut pouvoir passer les fils de touche en touche sans que cela soit visible, elle est obligée d'usiner l'entretoise 120 (c'est-à-dire de pratiquer des orifices dans l'entretoise), ce qui n'est pas possible sans abimer la plaque de verre 140.

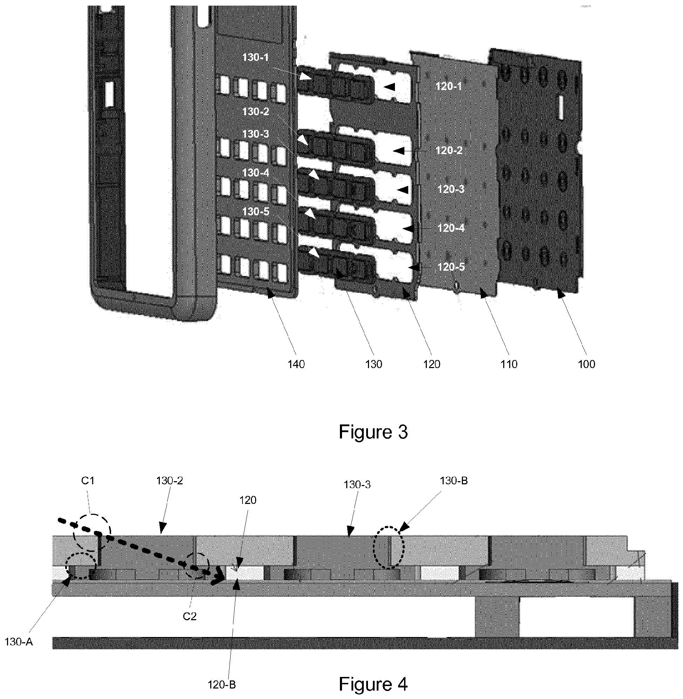

En effet, comme illustré en figure 4, le passage d'un fil d'une série de touche à l'autre nécessite un perçage (représenté par la flèche en pointillé). Le perçage doit être réalisé à l'extrémité de la flèche pour faire passer le fil de la première série de touche (130-2) à la deuxième série de touche (130-3). Pour qu'il ne soit pas visible, le fil doit passer dans l'entretoise 120. Or pour percer un trou dans l'entretoise 120, l'attaquant abime forcément la plaque de verre 140, soit dans sa partie supérieure (C1) soit dans sa partie inférieure (C2). Cet effet technique (abimer nécessairement la plaque de verre lors d'un perçage) est obtenu de par la configuration des séries de touches (et/ou de l'entretoise) en combinaison avec la plaque de verre. En effet, la largeur de la base des séries de touches 130-A (ou la largeur de l'entretoise entre les séries de touches 120-B) est choisie de sorte à obliger une altération de la plaque de verre en cas d'usinage. Cette largeur (130-A) est par exemple supérieure ou égale à la hauteur de la plaque de verre (130-B). Dès lors, il n'est pas possible de percer l'entretoise sans abimer la plaque de verre.

Dans un mode de réalisation supplémentaire, la plaque de verre 140 est sérigraphiée sur sa face arrière : l'attaque dite « middle layer » est alors encore plus visible que lorsque la vitre n'est pas sérigraphiée.

Bien entendu, les caractéristiques et modes de réalisation exposés préalablement sont combinables entre eux.

## Revendications

1. Clavier (100) d'un dispositif de saisie de données, clavier du type comprenant:
- une plaque de matériau transparent (140);
- une entretoise (120) comprenant une pluralité d'emplacement de positionnement de touches;
- un circuit imprimé (100) situé sous l'entretoise (120); et
- une pluralité de touches (130), chaque touche étant disposée au moins indirectement en contact avec une empreinte de touche correspondante sur ledit circuit imprimé (100), **caractérisé en ce que** :
- ladite plaque de matériau transparent (140) comprend des trous correspondant à chaque touche,
- une largeur de l'entretoise entre au moins deux touches est choisie de sorte à obliger une altération de la plaque de matériau transparent (140) en cas d'usinage afin de passer des fils de touche en touche, et
- le circuit imprimé (100), l'entretoise (120) et la plaque de matériau transparent (140) sont appliqués de sorte à constituer un ensemble indémontable de l'extérieur du dispositif de saisie de données.

2. Clavier selon la revendication 1, **caractérisé en ce que** ladite pluralité de touches comprend des touches en matériau déformable.

3. Clavier selon la revendication 1, **caractérisé en ce que** ladite pluralité de touches est divisée en un nombre prédéterminé de séries de touches (130-1, 130-2, 130-3, 130-4, 130-5), chaque série de touche constituant un élément indépendant comprenant une base, ladite base reposant au moins indirectement sur ledit circuit imprimé.

4. Clavier selon la revendication 3, **caractérisé en ce que** ladite base comprenant en outre une forme complémentaire d'un emplacement de positionnement de touches (120-1, 120-2, 120-3, 120-4, 120-5) de ladite entretoise.

5. Clavier selon la revendication 3, **caractérisé en ce que** ladite base s'étend sous la plaque de matériau transparent sur une longueur prédéterminée (130-A).

6. Clavier selon la revendication 5, **caractérisé en ce que** la longueur prédéterminée (130-A) est déterminée en fonction de l'épaisseur (130-B) de ladite plaque de matériau transparent.

7. Clavier selon la revendication 1, **caractérisé en ce qu'**il comprend une feuille de dôme (110) faisant interfaçage entre ledit circuit imprimé (100) et lesdites touches (130).

8. Terminal de paiement, **caractérisé en ce qu'**il comprend un clavier selon l'une quelconque des revendications 1 à 7.

## Patentansprüche

1. Tastatur (100) einer Dateneingabevorrichtung, Tastatur des Typs, umfassend:
- eine Platte aus transparentem Material (140),
- ein Distanzstück (120), umfassend mehrere Stellen zum Positionieren von Tasten,
- eine Leiterplatte (100), die unter dem Distanzstück (120) angeordnet ist, und
- mehrere Tasten (130), wobei jede Taste mindestens indirekt in Kontakt mit einem entsprechenden Tastenabdruck auf der Leiterplatte (100) angeordnet ist, **dadurch gekennzeichnet, dass**:
- die Platte aus transparentem Material (140) Löcher aufweist, die jeder Taste entsprechen,
- eine Breite des Distanzstücks zwischen mindestens zwei Tasten derart gewählt wird, um eine Änderung der Platte aus transparentem Material (140) im Falle von einer Bearbeitung zu erzwingen, um Drähte von einer Taste zur anderen einzuziehen, und
- die Leiterplatte (100), das Distanzstück (120) und die Platte aus transparentem Material (140) derart angebracht sind, um eine Baugruppe zu bilden, die von der Außenseite der Dateneingabevorrichtung nicht abmontierbar ist.

2. Tastatur nach Anspruch 1, **dadurch gekennzeichnet, dass** die mehreren Tasten Tasten aus verformbaren Material aufweisen.

3. Tastatur nach einem der vorhergehenden Ansprüche, **dadurch gekennzeichnet, dass** die mehreren Tasten in eine vorbestimmte Anzahl von Tastenreihen (130-1, 130-2, 130-3, 130-4, 130-5) unterteilt sind, wobei jede Tastenreihe ein unabhängiges Element bildet, das eine Basis aufweist, wobei die Basis mindestens indirekt auf der Leiterplatte ruht.

4. Tastatur nach Anspruch 3, **dadurch gekennzeichnet, dass** die Basis ferner eine komplementäre Form einer Stelle zum Positionieren von Tasten (120-1, 120-2, 120-3, 120-4, 120-5) des Distanzstücks aufweist.

5. Tastatur nach Anspruch 3, **dadurch gekennzeichnet, dass** sich die Basis unter der Platte aus transparentem Material über eine vorbestimmte Länge (130-A) erstreckt.

6. Tastatur nach Anspruch 5, **dadurch gekennzeichnet, dass** die vorbestimmte Länge (130-A) in Abhängigkeit von der Dicke (130-B) der Platte aus transparentem Material bestimmt wird.

7. Tastatur nach Anspruch 1, **dadurch gekennzeichnet, dass** sie eine Kuppelfolie (110) aufweist, die eine Schnittstelle zwischen der Leiterplatte (100) und den Tasten (130) bildet.

8. Zahlungsterminal, **dadurch gekennzeichnet, dass** es eine Tastatur nach einem der Ansprüche 1 bis 7 aufweist.

## Claims

1. Keyboard (10) of a data entry device, a keyboard of the type comprising:
- A plate of transparent material (140),
- A spacer (120) comprising a plurality of key-positioning locations,
- A printed circuit board (100) located under the spacer (120), and
- A plurality of keys (130), each key being disposed so as to be at least indirectly in contact with a corresponding key imprint on said printed circuit board (100),
**Characterized in that**:
- said plate of transparent material (140) comprises holes corresponding to each key,
- a width of the spacer between at least two keys is chosen so that said plate of transparent material (140) will deteriorate in the event of machining for inserting wires from key to key,
- and said printed circuit board (100), said spacer (120) and the plate of transparent material (140) are applied so as to constitute an assembly that is non-dismountable from the exterior of the data entry device.

2. Keyboard according to claim 1, **characterized in that** said plurality of keys comprises keys made of deformable material.

3. Keyboard according to claim 1, **characterized in that** said plurality of keys is divided into a predetermined number of series of keys (130-1, 130-2, 130-3, 130-4, 130-5), each series of keys constituting an independent element comprising a base, said base resting at least indirectly on said printed circuit.

4. Keyboard according to claim 3, **characterized in** said base furthermore has a shape complementary to a key-positioning location (120-1, 120-2, 120-3, 120-4, 120-5) of said spacer.

5. Keyboard according to claim 3, **characterized in that** said base extends beneath the plate of transparent material over a predetermined length (130-A).

6. Keyboard according to claim 5, **characterized in that** the predetermined length (130-A) is determined as a function of the thickness of said plate of transparent material.

7. Keyboard according to claim 1, **characterized in that** it comprises a dome foil (110) acting as an interface between said printed circuit board (100) and said keys (130).

8. Payment terminal, **characterized in that** it comprises a keyboard according to any one of the claims 1 to 7.
